# EUROPÄISCHE PATENTSCHRIFT

(11) **EP 1 839 924 B1**
(45) Veröffentlichungstag und Bekanntmachung des Hinweises auf die Patenterteilung: **05.01.2011**
(21) Anmeldenummer: 07000651.5
(22) Anmeldetag: 13.01.2007
(51) Int. Cl.: B60K 5/12

(54) **Tragstruktur mit zwei Lagerelementen zum Lagern einer Antriebsmaschine**
Supporting structure with two mounting elements for mounting a prime mover
Structure du support avec deux eléments de stockage destiné au stockage d'une machine motrice

(30) Priorität: 31.03.2006 DE 102006014975
(43) Veröffentlichungstag der Anmeldung: 03.10.2007
(73) Patentinhaber: Dr. Ing. h.c. F. Porsche AG, 70435 Stuttgart (DE)
(72) Erfinder: Schiebel, Dieter, 70825 Korntal-Münchigen (DE); Lippold, Andrea, 70499 Stuttgart (DE)

(56) Entgegenhaltungen:
- EP-A- 1 331 124
- DE-A1- 10 352 078
- DE-A1-102005 058 928
- DE-B3-102004 016 616
- US-A1- 4 531 694

## Beschreibung

Die vorliegende Erfindung bezieht sich auf eine Tragstruktur mit zwei Lagerelementen zum Lagern einer Antriebsmaschine eines Fahrzeugs.

Obwohl auf beliebige Fahrzeuge anwendbar, werden die vorliegende Erfindung sowie die ihr zugrunde liegende Problematik in Bezug auf ein Fahrzeug mit einer im Heckbereich angeordneten Antriebsmaschine näher erläutert.

Insbesondere bei Sportwagen wird eine Lagerung der Antriebsmaschine im Heckbereich des Fahrzeugs bevorzugt. Im Allgemeinen sind speziell ausgebildete Motorlagerungen als separate Einzelteile vorgesehen, welche beispielsweise an den Längsträgern der Fahrzeugkarosserie montiert sind und einer Lagerung der Antriebsmaschine dienen.

An diesem Ansatz hat sich jedoch die Tatsache als nachteilig herausgestellt, dass lediglich für die Funktion der Lagerung der Antriebsmaschine separate Motorlagerungen gefertigt werden müssen. Ferner können Motorbewegungen über die Motorlagerungen auf die Karosseriestruktur übertragen werden, so dass die Gefahr einer Verwindung der Fahrzeugkarosserie besteht. Spezielle Versteifungselemente für eine Erhöhung der Steifigkeit der Fahrzeugkarosserie im Bereich der Motorlagerungen sind daher zusätzlich erforderlich. Dies birgt einen zusätzlichen Herstellungsaufwand sowie zusätzliche Herstellungskosten in sich. Eine Tragstruktur mit den Merkmalen des Oberbegriffs des Anspruchs 1 ist aus DE 19923012 A1 bekannt.

Es liegt der vorliegenden Erfindung die Aufgabe zugrunde, eine Tragstruktur mit zwei Lagerelementen zum Lagern einer Antriebsmaschine zu schaffen, welches die oben genannten Nachteile beseitigt und eine Motorlagerung mit gleichzeitiger Verringerung der Verwindungsgefahr der Fahrzeugkarosserie gewährleistet.

### VORTEILE DER ERFINDUNG

Diese Aufgabe wird erfindungsgemäß durch eine Tragstruktur mit zwei Lagerelementen mit den Merkmalen des Patentanspruchs 1 gelöst.

Die der vorliegenden Erfindung zugrunde liegende Idee besteht darin, dass das Lagerelement zum Lagern einer Antriebsmaschine eines Fahrzeugs einen Grundkörper, welcher einen Aufnahmebereich zum Aufnehmen eines zugeordneten Lagerabschnitts der Antriebsmaschine umfasst, und mindestens eine Flanschanordnung aufweist, welche an dem Grundkörper angeformt und sowohl mit einem zugeordneten Längsträgerabschnitt als auch mit einem zugeordneten Querträgerabschnitt der Trägerstruktur des Fahrzeugs zum Bilden einer Knotenstelle fest verbindbar ist.

Die vorliegende Erfindung weist gegenüber den bekannten Ansätzen den Vorteil auf, dass das Lagerelement eine Doppelfunktion besitzt, d.h. einerseits einer Lagerung der Antriebsmaschine an dem Tragrahmen des Fahrzeugs dient und zusätzlich den Querträger mit dem zugeordneten Längsträger beispielsweise in einem heckseitigen Eckbereich derart verbindet, dass die Steifigkeit des Tragrahmens erhöht wird. Somit wird eine versteifende Wirkung in den Eckbereichen und eine momentensteife Lagerung der Antriebsmaschine geschaffen, so dass die Verwindungsgefahr der Fahrzeugkarosserie vorteilhaft verringert wird.

In den Unteransprüchen finden sich vorteilhafte Ausgestaltungen und Verbesserungen des im Patentanspruch 1 angegebenen Lagerelementes.

Gemäß einer bevorzugten Weiterbildung ist das Lagerelement als einteiliges Gussteil aus einer Leichtmetalllegierung oder dergleichen ausgebildet. Dadurch ist das Lagerelement mit einem gängigen und somit kostengünstigen Herstellungsverfahren mit einer hohen Steifigkeit und einem geringen Gewicht herstellbar.

Gemäß einer weiteren bevorzugten Weiterbildung weist das Lagerelement einen runden Aufnahmetopf mit einem bodenseitigen Durchbruch und mehrere Flanschabschnitte auf.

Beispielsweise sind obere Flanschabschnitte für eine horizontale Auflage auf den zugeordneten Längs- und Querträgern sowie untere Flanschabschnitte für eine vertikale Anlage an den zugeordneten Längs- und Querträgern vorgesehen. Vorzugsweise werden die oberen und unteren Flanschabschnitte mittels eines geeigneten Schweißverfahrens oder Nietverfahrens an den zugeordneten Längs- und Querträgern fest angebracht. Dadurch bilden die Lagerelemente in den heckseitigen Eckbereichen Knotenelemente für eine Verbesserung der Steifigkeit und eine Verringerung der Verwindungsgefahr der Tragstruktur.

Des Weiteren wird eine Tragstruktur der Fahrzeugkarosserie beansprucht, welche zwei Lagerelemente gemäß der vorliegenden Erfindung umfasst, die jeweils in einem heckseitigen Eckbereich zwischen einem Längsträger und einem Querträger des Fahrzeugs angeordnet sind.

### ZEICHNUNGEN

Die Erfindung wird im Folgenden anhand von Ausführungsbeispielen unter Bezugnahme auf die beiliegenden Figuren der Zeichnung näher erläutert.

Von den Figuren zeigen:
- Figur 1: eine perspektivische Ansicht eines Lagerelementes gemäß einem bevorzugten Ausführungsbeispiel der vorliegenden Erfindung;
- Figur 2: eine Draufsicht auf das Lagerelement aus Figur 1;
- Figur 3: eine Seitenansicht des Lagerelementes aus den Figuren 1 und 2;
- Figur 4: eine Querschnittsansicht entlang der Schnittlinie A-A aus Figur 3;
- Figur 5: eine Unteransicht des Lagerelementes aus den Figuren 1 bis 4;
- Figur 6: eine perspektivische Ansicht aus Sicht von unten eines in einem Tragrahmen eines Fahrzeugs integrierten Lagerelementes gemäß einem bevorzugten Ausführungsbeispiel der vorliegenden Erfindung; und
- Figur 7: eine perspektivische Ansicht aus Sicht von oben eines in einem Tragrahmen eines Fahrzeugs integrierten Lagerelementes gemäß einem bevorzugten Ausführungsbeispiel der vorliegenden Erfindung.

### BESCHREIBUNG BEVORZUGTER AUSFÜHRUNGSBEISPIELE

In den Figuren der Zeichnung bezeichnen dieselben Bezugszeichen gleiche oder funktionsgleiche Komponenten, soweit nichts Gegenteiliges angegeben ist.

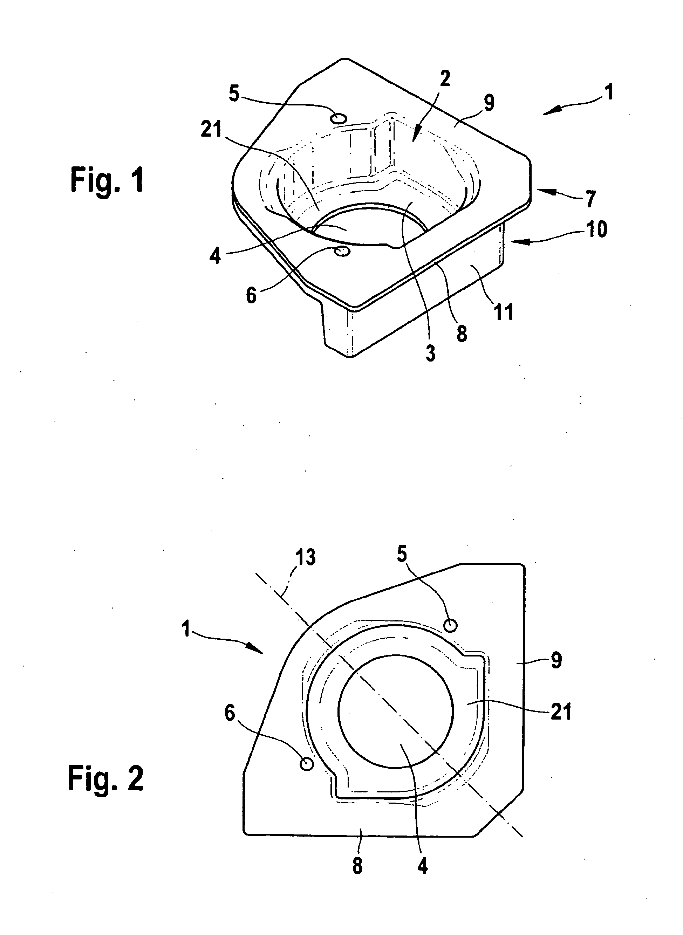

Im Folgenden wird unter Bezugnahme auf die Figuren 1 bis 5 ein Lagerelement 1 gemäß einem bevorzugten Ausführungsbeispiel der vorliegenden Erfindung näher erläutert.

Das beispielhaft dargestellte Lagerelement 1 besitzt als Grundkörper einen in etwa runden Aufnahmetopf 2, welcher einen Aufnahmebereich zum Aufnehmen eines zugeordneten Lagerabschnitts einer Antriebsmaschine des Fahrzeugs bildet. Der Aufnahmetopf 2 weist vorzugsweise ein durchgehendes Aufnahmeloch mit einer oberen Öffnung 3 und einer unteren Öffnung 4 auf, wobei die obere Öffnung 3 von einem vollumfänglich nach außen vorstehenden Randabschnitt umschlossen wird und wobei die untere Öffnung 4 als bodenseitiger, kreisrunder Durchbruch im Boden des Aufnahmetopfes 2 ausgebildet ist. Die untere Öffnung 4 weist vorzugsweise einen kleineren Durchmesser auf als die obere Öffnung 3 und umfasst ferner eine umlaufende Umrandung 21, welche einer Abstützung eines zugeordneten Bereiches oder einer zugeordneten Komponente des zugeordneten Lagerabschnitts des Fahrzeugmotors dient.

Die Innenwandung des Aufnahmetopfes 2 ist vorzugsweise komplementär zu dem aufzunehmenden Lagerabschnitt der Antriebsmaschine des Fahrzeugs derart ausgebildet, dass der zugeordnete Lagerabschnitt der Antriebsmaschine in den Aufnahmetopf 2 einsetzbar bzw. hindurch steckbar und ggf. darin befestigbar ist. Beispielsweise kann der zugeordnete Lagerabschnitt der Antriebsmaschine in den zugeordneten Einstecköffnungen 5, 6, welche im oberen Umfangsbereich des Aufnahmetopfes 2 vorgesehen sind, verschraubt werden.

Das Lagerelement 1 weist ferner vorzugsweise mehrere Flanschabschnitte 7, 10 auf, welche einer Auflage und/oder Anlage auf bzw. an einem zugeordneten Längs- oder Querträger des Tragrahmens des Fahrzeugs dienen.

Gemäß dem vorliegenden Ausführungsbeispiel umfasst das Lagerelement 1 einen oberen Flanschabschnitt 7, welcher aus dem oberen Randabschnitt der oberen Öffnung 3 hervorgeht und aus zwei in etwa senkrecht zueinander abgewinkelten und in vertikaler Richtung ausgerichteten oberen Flanschbereichen 8, 9 besteht. Die oberen Flanschbereiche 8, 9 ragen jeweils im oberen Bereich des Aufnahmetopfes 2 in radialer Richtung nach außen zum Bilden von Auflageflanschen vor, wie insbesondere in den Figuren 1, 3 und 5 ersichtlich ist. Die oberen Flanschbereiche 8, 9 ragen vorzugsweise in horizontaler Richtung derart von dem Aufnahmetopf 2 vor, dass sie jeweils eine Auflagekante für eine flächige Auflage an den zugeordneten Längs- und Querträgern bilden. Vorzugsweise bilden die oberen Flanschbereiche 8, 9 einen Teil der Auflagefläche der zugeordneten Lagerabschnitte der Antriebsmaschine.

Das Lagerelement 1 weist ferner einen unteren Flanschabschnitt 10 auf, welcher aus zwei in etwa senkrecht zueinander abgewinkelten und in vertikaler Richtung unterhalb der oberen Flanschbereiche 8, 9 ausgerichteten unteren Flanschbereichen 11, 12 besteht. Die unteren Flanschbereiche 11, 12 dienen einer Befestigung des Lagerelements 1 an jeweils zugeordneten Abschnitten der Längs- und Querträger.

Wie insbesondere in Figur 2 illustriert ist, ist das Lagerelement 1 bezüglich einer vertikalen Symmetrieebene 13 spiegelsymmetrisch ausgebildet. Das Lagerelement 1 wird vorzugsweise als Gussteil aus einer geeigneten Aluminiumlegierung oder dergleichen hergestellt, so dass mittels eines gängigen und kostengünstigen Verfahrens ein steifes und leichtes Lagerelement gewährleistet ist.

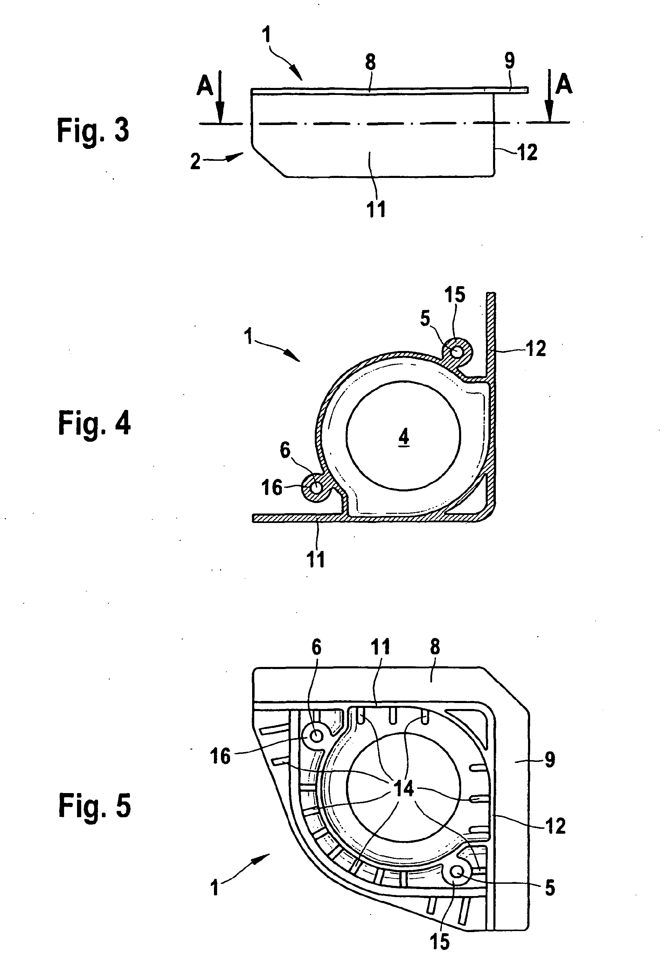

Für eine zusätzliche Versteifung des Lagerelementes 1 kann dieses vorzugsweise an der Unterseite, wie in Figur 5 illustriert ist, Verstärkungselementen 14 umfassen. Dabei können die Verstärkungselemente 14 beispielsweise als Verstärkungswinkel, sich in radialer Richtung erstreckende Verstärkungsrippen oder sich koaxial um dem Aufnahmetopf 2 herum erstreckende Verstärkungsstege ausgebildet sein.

Wie in der Querschnittsansicht in Figur 4 ersichtlich ist, sind die Einstecköffnungen 5, 6 mit Aufnahmehülsen 15, 16 versehen, in welchen zugeordneten Lagerabschnitte der Antriebsmaschine des Fahrzeugs verschraubt werden. Durch die Aufnahmehülsen 15, 16 kann das Lagerelement 1 relativ dünnwandig mit dennoch stabilen zugeordneten Schraubverbindung ausgebildet werden, so dass insgesamt ein leichtes Bauteil gewährleistet ist, welches durch Vorsehen der Verstärkungselemente 14 zudem noch die erforderliche Steifigkeit besitzt.

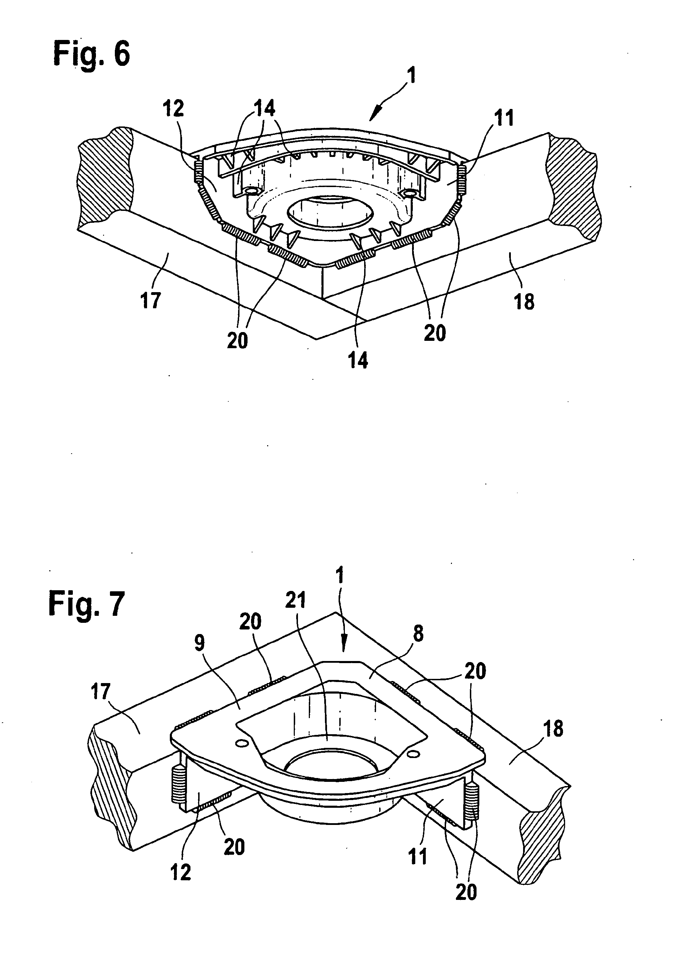

Im Folgenden wird unter Bezugnahme auf die Figuren 6 und 7 der montierte Zustand des oben beschriebenen Lagerelementes 1 in einem heckseitigen Tragrahmen eines Fahrzeugs näher erläutert. Dabei illustriert Figur 6 eine perspektivische Ansicht aus Sicht von unten und Figur 7 eine perspektivische Ansicht aus Sicht von oben des exemplarischen Lagerelementes 1, welches jeweils in beiden, sich gegenüberliegenden heckseitigen Eckbereichen des Tragrahmens im Bereich der zugeordneten Endabschnitte der Längsträger 17 und des Querträgers 18 vorgesehen ist. In den Figuren 6 und 7 ist lediglich der rechte heckseitige Eckbereich des Tragrahmens ausschnittsweise dargestellt, wobei die Anordnung analog auf den linken heckseitigen Eckbereich oder irgendeinen anderen Tragrahmenbereich anwendbar ist.

Wie in den Figuren 6 und 7 illustriert ist, liegt der obere Flanschbereich 8 des oberen Flanschabschnitts 7 auf der Oberseite des zugeordneten Querträgers 18 und der obere Flanschbereich 9 des oberen Flanschabschnitts 7 auf der Oberseite des zugeordneten Längsträgers 17 flächig auf. Die oberen Flanschbereiche 8, 9 werden beispielsweise mittels Schweißnähten 20 jeweils mit den zugeordneten Abschnitten des Längsträgers 17 bzw. des Querträgers 18 fest verbunden.

Der untere Flanschbereich 11 des unteren Flanschabschnitts 10 befindet sich vorzugsweise in flächiger Anlage mit der zugeordneten Seitenfläche des zugeordneten Querträgers 18 und der untere Flanschbereich 12 des unteren Flanschabschnitts 10 befindet sich vorzugsweise analog in flächiger Anlage mit der zugeordneten Seitenfläche des zugeordneten Längsträgers 17. Die unteren Flanschbereiche 11, 12 werden analog zu den oberen Flanschbereichen 8, 9 ebenfalls mittels Schweißnähten 20 oder dergleichen an den zugeordneten Abschnitten des Längsträgers 17 bzw. des Querträgers 18 fest angebracht.

Somit schafft die vorliegende Erfindung ein Lagerelement 1, welches in den heckseitigen Eckbereichen des Tragrahmens der Fahrzeugkarosserie derart fest montierbar ist, dass es neben der Lagerung des Fahrzeugmotors zusätzlich noch eine feste Verbindung des Querträgers und des zugeordneten Längsträgers miteinander in dem Eckbereich als Knotenstelle gewährleistet. Dadurch weist das Lagerelement eine Doppelfunktion auf, wobei ggf. zusätzliche Verbindungen zwischen den Längsträgern und dem Querträger nicht weiter erforderlich sind.

Obwohl die vorliegende Erfindung anhand bevorzugter Ausführungsbeispiele vorstehend beschrieben wurde, ist sie darauf nicht beschränkt, sondern auf vielfältige Weise modifizierbar.

## Patentansprüche

1. Tragstruktur einer Fahrzeugkarosserie mit zwei Lagerelementen (1), die jeweils in einem heckseitigen Eckbereich zwischen einem Längsträgerabschnitt (17) und einem Querträgerabschnitt (18) eines Fahrzeugs angeordnet sind, wobei jedes Lagerelement (1) zum Lagern einer Antriebsmaschine des Fahrzeugs einen Grundkörper (2) aufweist, welcher einen Aufnahmebereich zum Aufnehmen eines zugeordneten Lagerabschnitts der Antriebsmaschine aufweist; und außerdem eine Flanschanordnung (7, 10) aufweist, welche an dem Grundkörper (2) angeformt und sowohl mit einem zugeordneten Längsträgerabschnitt (17) als auch mit einem zugeordneten Querträgerabschnitt (18) der Tragstruktur des Fahrzeugs fest verbunden ist,
**dadurch gekennzeichnet,**
**dass** zum Bilden jeweils einer Knotenstelle zwischen Längsträgerabschnitt (17) und dem Querträgerabschnitt die Flanschanordnung (7, 10) folgendes aufweist:
einen oberen Flanschabschnitt (7), welcher für eine horizontale Auflage sowohl auf dem zugeordneten Längsträgerabschnitt (17) als auch auf dem zugeordneten Querträgerabschnitt (18) in radialer Richtung von dem oberen Bereich des Grundkörpers (2) vorsteht,
und der obere Flanschabschnitt (7) zwei in etwa senkrecht zueinander angeordnete und als ebene Fläche ausgebildete obere Flanschbereiche (8, 9) aufweist, von denen der eine Flanschbereich (9) dem Längsträgerabschnitt (17) und der weitere Flanschbereich (8) dem Querträgerabschnitt (18) für eine jeweils horizontale, flächige Auflage auf denselben zugeordnet ist,
sowie der eine Flanschbereich (9) des oberen Flanschabschnitts (7) an dem zugeordneten Längsträgerabschnitt (17) und der weitere Flanschbereich (8) des oberen Flanschabschnitts (7) an dem zugeordneten Querträgerabschnitt (18) mittels eines geeigneten Schweißverfahrens fest angebracht sind;
und außerdem die Flanschanordnung (7, 10) einen unteren Flanschabschnitt (10) aufweist, welcher für eine vertikale Anlage sowohl an dem zugeordneten Längsträgerabschnitt (17) als auch an dem zugeordneten Querträgerabschnitt (18) in vertikaler Richtung an der Unterseite des oberen Flanschabschnitts (7) benachbart zu dem Aufnahmebereich des Grundkörpers (2) angeordnet ist,
und der untere Flanschabschnitt (10) zwei in etwa senkrecht zueinander angeordnete und als ebene Fläche ausgebildete untere Flanschbereiche (11, 12) aufweist, von denen der eine Flanschbereich (12) dem Längsträgerabschnitt (18) und der weitere Flanschbereich (11) dem Querträgerabschnitt (18) für eine vertikale, flächige Anlage an denselben zugeordnet ist,
sowie der eine Flanschbereich (12) des unteren Flanschabschnitts (10) an dem zugeordneten Längsträgerabschnitt (17) und der weitere Flanschbereich (11) des unteren Flanschabschnitts (10) an dem zugeordneten Querträgerabschnitt (18) mittels eines geeigneten Schweißverfahrens fest angebracht sind.

2. Tragstruktur nach Anspruch 1, **dadurch gekennzeichnet, dass** das Lagerelement (1) als einteiliges Gussteil, vorzugsweise aus einer Leichtmetalllegierung wie beispielsweise einer Aluminiumlegierung, ausgebildet ist.

3. Tragstruktur nach Anspruch 1 oder 2, **dadurch gekennzeichnet, dass** der Grundkörper (2) des Lagerelements (1) als runder Aufnahmetopf (2) mit einem bodenseitigen Durchbruch (4) ausgebildet ist.

4. Tragstruktur nach Anspruch 1, 2 oder 3, **dadurch gekennzeichnet, dass** das Lagerelement (1) an der Unterseite mehrere Verstärkungselemente (14) für eine Erhöhung der Steifigkeit des Lagerelementes (1) aufweist.

5. Tragstruktur nach wenigstens einem der vorhergehenden Ansprüche, **dadurch gekennzeichnet, dass** das Lagerelement (1) zu einer vertikalen Symmetrieebene (13) spiegelsymmetrisch ausgebildet ist.

## Claims

1. Supporting structure of a vehicle body with two mounting elements (1) which are each arranged in a rear corner region between a longitudinal member section (17) and a crossmember section (18) of a vehicle, wherein each mounting element (1) has, for mounting a prime mover of the vehicle, a basic body (2) which has a receiving region for receiving an associated mounting section of the prime mover; and also has a flange arrangement (7, 10) which is integrally formed on the basic body (2) and is fixedly connected both to an associated longitudinal member section (17) and to an associated crossmember section (18) of the supporting structure of the vehicle, **characterized in that**, in order to form a respective intersection between the longitudinal member section (17) and the crossmember section, the flange arrangement (7, 10) has the following:
an upper flange section (7) which protrudes in the radial direction from the upper region of the basic body (2) for horizontal support both on the associated longitudinal member section (17) and on the associated crossmember section (18),
and the upper flange section (7) has two upper flange regions (8, 9) which are arranged approximately perpendicularly to each other and are designed as a planar surface and of which the one flange region (9) is assigned to the longitudinal member section (17) and the other flange region (8) is assigned to the crossmember section (18), for horizontal, planar support on each thereof,
and the one flange region (9) of the upper flange section (7) is fixedly mounted on the associated longitudinal member section (17) and the other flange region (8) of the upper flange section (7) is fixedly mounted on the associated crossmember section (18), by means of a suitable welding method;
and, in addition, the flange arrangement (7, 10) has a lower flange section (10) which is arranged in the vertical direction on the lower side of the upper flange section (7) adjacent to the receiving region of the basic body (2) for vertical contact both with the associated longitudinal member section (17) and with the associated crossmember section (18),
and the lower flange section (10) has two lower flange regions (11, 12) which are arranged approximately perpendicularly to each other and are designed as a planar surface and of which the one flange region (12) is assigned to the longitudinal member section (18) and the other flange region (11) is assigned to the crossmember section (18), for vertical, planar contact therewith, and the one flange region (12) of the lower flange section (10) is fixedly mounted on the associated longitudinal member section (17) and the other flange region (11) of the lower flange section (10) is fixedly mounted on the associated crossmember section (18), by means of a suitable welding method.

2. Supporting structure according to Claim 1, **characterized in that** the bearing element (1) is designed as a single-part casting, preferably made of a light metal alloy, such as, for example, an aluminium alloy.

3. Supporting structure according to Claim 1 or 2, **characterized in that** the basic body (2) of the mounting element (1) is designed as a round receiving cup (2) with an aperture (4) in the base.

4. Supporting structure according to Claim 1, 2 or 3, **characterized in that** the mounting element (1) has a plurality of reinforcing elements (14) on the lower side to increase the rigidity of the mounting element (1).

5. Supporting structure according to at least one of the preceding claims, **characterized in that** the mounting element (1) is of mirror-symmetrical design to a vertical plane of symmetry (13).

## Revendications

1. Structure de support d'une carrosserie de véhicule avec deux éléments de stockage (1) respectivement disposés dans une zone de coin située côté arrière entre un segment de longeron (17) et un segment de traverse (18) d'un véhicule, chaque élément de stockage (1) destiné au stockage d'une machine motrice du véhicule comportant un corps de base (2) comportant une zone de logement pour loger un segment de support associé de la machine motrice ; et comportant en outre un agencement de bride (7, 10) formé au niveau du corps de base (2) et relié fixement tant à un segment de longeron (17) associé qu'à un segment de traverse (18) associé de la structure de support du véhicule ;
**caractérisée en ce que** :
pour former respectivement un point de noeud entre le segment de longeron (17) et le segment de traverse,
l'agencement de bride (7, 10) comporte les éléments suivants :
un segment de bride supérieur (7) qui ressort, pour un appui horizontal tant sur le segment de longeron (17) associé que sur le segment de traverse (18) associé, de la zone supérieure du corps de base (2) dans la direction radiale ; et
le segment de bride supérieur (7) qui comporte deux zones de bride (8, 9) supérieures disposées approximativement perpendiculairement l'une par rapport à l'autre et prenant une forme de surface plane, parmi lesquelles la zone de bride (9) est associée au segment de longeron (17) et l'autre zone de bride (8) est associée au segment de traverse (18) pour reposer respectivement à l'horizontale, à plat sur celui-ci ; et
la zone de bride (9) du segment de bride supérieur (7) qui est agencée fixement au niveau du segment de longeron (17) associé et l'autre zone de bride (8) du segment de bride supérieur (7) qui est agencée fixement au segment de traverse (18) associé à l'aide d'un procédé de soudage adapté ; et
l'agencement de bride (7, 10) qui comporte en outre un segment de bride (10) inférieur disposé pour un agencement vertical tant contre le segment de longeron (17) associé que contre le segment de traverse (18) associé dans la direction verticale au niveau du côté inférieur du segment de bride supérieur (7) connexe de la zone de logement du corps de base (2) ; et
le segment de bride (10) inférieur qui comporte deux zones de bride (11, 12) inférieures disposées perpendiculairement l'une par rapport à l'autre et réalisées sous la forme d'une surface plane, parmi lesquelles la première zone de bride (12) est associée au segment de longeron (18) et l'autre zone de bride (11) est associée au segment de traverse (18) pour un agencement vertical plat au niveau de celui-ci ; et
la première zone de bride (12) du segment de bride (10) inférieur étant amenée fixement contre le segment de longeron (17) associé et l'autre zone de bride (11) du segment de bride (10) inférieur étant amenée fixement contre le segment de traverse (18) associé à l'aide d'un procédé de soudage adapté.

2. Structure de support selon la revendication 1, **caractérisée en ce que** l'élément de stockage (1) est réalisé sous la forme d'une pièce moulée réalisée d'un seul tenant, de préférence à partir d'un alliage de métaux légers tel qu'un alliage d'aluminium.

3. Structure de support selon la revendication 1 ou 2, **caractérisée en ce que** le corps de base (2) de l'élément de stockage (1) est réalisé sous la forme d'une cuvette de logement (2) ronde avec une percée (4) côté plancher.

4. Structure de support selon la revendication 1, 2 ou 3, **caractérisée en ce que** l'élément de stockage (1) comporte au niveau du côté inférieur plusieurs éléments de renfort (14) pour accroître la rigidité de l'élément de stockage (1).

5. Structure de support selon au moins l'une quelconque des revendications précédentes, **caractérisée en ce que** l'élément de stockage (1) est réalisé de façon symétrique par rapport à un plan de symétrie (13) vertical.
